# EUROPÄISCHE PATENTANMELDUNG

(11) **EP 1 278 011 A2**
(43) Veröffentlichungstag der Anmeldung: **22.01.2003**
(21) Anmeldenummer: 02012847.6
(22) Anmeldetag: 11.06.2002
(51) Int. Cl.: F23N 1/00

(54) **Ventileinsatz und Ventil für Gasgeräte**

(30) Priorität: 19.07.2001 DE 10135117
(71) Anmelder: HeaTec Thermotechnik GmbH, 73066 Uhingen (DE)
(72) Erfinder: Schwarz, Hans-Jochen, Dr., 70190 Stuttgart (DE); Huang, Chung-Cheng, Pauden Scient.& Techn. Co.Ltd., Taipei, Sanchung City (TW)
(74) Vertreter: Patentanwälte Rüger, Barthelt & Abel

(57) **Zusammenfassung**

Ein Gasventil und ein Gasventileinsatz sind dazu vorgesehen, an Brennern, insbesondere Brennern mit elektrischer Zündung beim Öffnen zunächst einen gedrosselten Gasstrom als Zündgasmenge und danach in dem gleichen Gaskanal möglichst schnell die volle Gasmenge durchzulassen. Dazu weist der Gasventileinsatz eine Ventilspindel (8) mit einem auf dieser mit Spiel gelagerten Ventilverschlussglied (7) auf. In diesem Ventilverschlussglied, das zu einem Hauptventil (15) gehört, ist ein Hilfsventil (14) ausgebildet, das durch die Bewegungen der Ventilspindel (8) gesteuert wird. Das Hilfsventil ist durch ein Federmittel in Schließrichtung vorgespannt, wobei das gleiche Federmittel das Ventilverschlussglied (7) in Öffnungsrichtung vorspannt. Durch diese Gestaltung wird ein präzises, langsames Öffnen für eine Zündgasmenge und danach ein schlagartiges Öffnen des gesamten Gasventils (1) erreicht.

## Beschreibung

Die Erfindung betrifft einen Ventileinsatz und ein Ventil zum Sperren und Freigeben eines Gaskanals, vorzugsweise zur Anwendung bei Gasgeräten.

Brenner von Gasgeräten sowie anderweitige Anwendungsfälle erfordern häufig, dass ein Gasstrom kontrolliert gesperrt und freigegeben werden kann. Insbesondere an die Freigabe des Gasstroms werden gelegentlich besondere Anforderungen gestellt. Beispielsweise kann es erforderlich sein, ein Gasventil so zu gestalten, dass es, wenn es den Öffnungsbefehl empfängt, den Gasstrom allmählich anschwellend erst langsam und dann schnell freigibt.

Aus der DE 198 32 396 A1 ist es bekannt, Brenner im Teillastbetrieb zu zünden und dazu den Düsendruck abzusenken. Dazu sind zwei Ventile in Reihe geschaltet, eines zum Sperren und Freigeben des Gasstroms und eines zum Drosseln des Gasstroms. Beim Zünden ist das Drosselventil aktiv. Beide Ventile sind mit einer elektrischen Steuerung versehen. Zur Steuerung der Ventile und zur Koordination von der Tätigkeit ist eine Steuereinrichtung erforderlich, die beide Ventile ansteuert.

Davon ausgehend ist es Aufgabe der Erfindung, eine vereinfachte Anordnung zu schaffen, die das kontrollierte Freigeben eines Gasstroms mit hoher Präzision gestattet.

Weiter kommt es beim Zünden eines Brenners darauf an, dass der Zündvorgang möglichst verpuffungsfrei stattfindet. Andererseits aber soll der Zündvorgang schnell erfolgen und die Maximalleistung des Brenners soll möglichst schnell erreicht sein. Diese Aufgabe wird durch den Gasventileinsatz nach Anspruch 1, das Gasventil nach Anspruch 2 und das Verfahren nach Anspruch 12 gelöst.

Der Gasventileinsatz bzw. das Gasventil weist eine Ventilspindel auf, die mit einer Antriebseinrichtung verbunden ist und in Axialrichtung bewegbar ist. Die Antriebseinrichtung kann dabei sowohl eine Antriebseinrichtung sein, die die Ventilspindel mit vorbestimmten Axialkräften beaufschlagt, als auch eine Positioniereinrichtung, die weitgehend unabhängig von wirkenden Kräften die Position der Ventilspindel bestimmt. Es kommen demnach sowohl Membranantriebe, Magnetantriebe und dergl. als auch Motorstellantriebe in Betracht.

Bei dem erfindungsgemäßen Gasventileinsatz und dem entsprechenden Gasventil ist das Ventilverschlussglied mit Axialspiel an der Ventilspindel gelagert und in Öffnungsrichtung vorgespannt. Damit kann, wenn das Ventilverschlussglied von seinem Ventilsitz abgehoben ist, eine besonders schnelle Öffnungsbewegung erreicht werden, so dass das Ventilverschlussglied sehr schnell in eine Stellung überführt wird, in der es weit von dem Ventilsitz abgehoben ist. Auf diese Weise wird das Ventil sehr schnell in einen Arbeitsbereich überführt, in dem ein besonders geringer Druckabfall zu verzeichnen ist. Die Ventilöffnung erfolgt somit nahezu als Sprung; der vom Ventil verursachte Druckverlust ist minimal.

In Schließstellung ist das Ventilverschlussglied durch den Gasdruck, d.h. die von dem Ventil selbst erzeugte Druckdifferenz an seinem Ventilsitz gehalten. Zusätzlich kann eine Schließfeder auf die Ventilspindel wirken, um die Schließkraft zu verstärken. Bewegt sich die Ventilspindel nun in Öffnungsrichtung, hält der Gasdruck das Ventilverschlussglied zunächst weiter auf dem Ventilsitz und zwar gegen die Kraft des ersten Federmittels, das zwischen der Ventilspindel und dem Ventilverschlussglied wirkt. Erst wenn die Axialbewegung der Ventilspindel weiter fortgeschritten ist, so dass entweder der verfügbare Axialhub des Federmittels aufgebraucht ist, das Ventilverschlussglied am Ende seines Axialspiels angekommen ist oder die Kraft des ersten Federmittels die Haltekraft des Gasdrucks überwindet, hebt das Ventilverschlussglied vom Ventilsitz ab. Dabei wird es von dem ersten Federmittel praktisch sofort von dem Ventilsitz weg bewegt, so dass der Gaskanal praktisch augenblicklich ganz freigegeben wird. Durch die Änderung der Axialposition des Ventilverschlussglieds an der Ventilspindel wird außerdem erreicht, dass der erreichbare Abstand zwischen der Ventilspindel und dem Ventilsitz sehr groß wird, so dass das Ventil einen minimalen Druckverlust erzeugt.

Um vor dem schlagartigen Öffnen des Ventils einen Teilgasstrom freigeben zu können, ist in dem Ventilverschlussglied vorzugsweise ein Hilfskanal vorgesehen, in dem ein Hilfsventil angeordnet ist. Dieses Hilfsventil ist dem von dem Ventilverschlussglied und dem Ventilsitz gebildeten Hauptventil parallel geschaltet. Es ist vorzugsweise von der gleichen Ventilspindel gesteuert wie das Hauptventil. Das Hilfsventil ist außerdem vorzugsweise so ausgebildet, dass es bei Axialbewegung der Ventilspindel allmählich öffnet. Dies kann erreicht werden, indem es eine zylindrische Durchgangsöffnung aufweist in der ein Steuerkegel angeordnet ist. Eine besonders präzise Steuerung wird dabei erreicht, wenn die zylindrische Durchgangsöffnung und der Steuerkegel eine Länge aufweisen, die größer als der Durchmesser ist. Hierdurch können sehr geringe Gasmengen langsam ansteigend präzise gesteuert werden. Der Steuerkegel kann außerdem mit einem Verschlussglied vorzugsweise aus einem elastischen Dichtungswerkstoff verbunden sein, der stirnseitig an dem Einsatz aufsitzt, um diesen ganz zu verschließen, wenn das Hilfsventil in Schließstellung überführt ist.

Ebenso ist das Ventilverschlussglied des Hauptventils vorzugsweise wenigstens an seiner dem Ventilsitz zugewandten Seite mit einem elastischen Dichtungsmaterial versehen, um eine vollständige Abdichtung zu erbringen. Durch die Anordnung des Hilfsventils in dem Ventilverschlussglied des Hauptventils und das axiale Spiel dieses Ventilverschlussglieds auf der Ventilspindel kann erreicht werden, dass mit einer Öffnungsbewegung der Ventilspindel zunächst das Hilfsventil allmählich und dann das Hauptventil schlagartig geöffnet wird. Die allmähliche Freigabe des Hilfsventils erfolgt bei geschlossenem Hauptventil, so dass die gewünschten kleinen, langsam ansteigenden Gasströme besonders präzise eingestellt werden können.

Das Gasventil bzw. der Gasventileinsatz ist vorzugsweise mit einem Membranantrieb versehen, der über ein Pilotventil gesteuert ist. Das erste Federmittel, das das Ventilverschlussglied des Hauptventils in Öffnungsrichtung vorspannt, spannt das Hilfsventil, zugleich in Schließrichtung vor. Damit schließt das Hilfsventil wenn das Hauptventil ganz geöffnet ist. In der Folge befindet sich das stirnseitige Ende des Ventilkegels des Hilfsventils, der zugleich das stirnseitige Ende der Ventilspindel bildet, etwa in Höhe der ausgangsseitigen Mündung des Ventileinsatzes des Hilfsventils. Ein an der Stirnseite der Ventilspindel mündender Fluidkanal (Saugkanal) erfasst auf diese Weise den durch das strömende Gas erzeugten Unterdruck besonders wirksam, so dass zur Betätigung des Ventils geringste Druckdifferenzen und somit Druckverluste über dem Gasventil ausreichen.

Der Gasventileinsatz erfordert zur Erzeugung des gewünschten Öffnungsverlaufs keinerlei besondere Maßnahmen an dem Ventilgehäuse. Er kann in herkömmliche Standardventilgehäuse eingebaut werden, wobei weder Änderungen am vorhandenen Ventilsitz noch sonstige Maßnahmen wie beispielsweise zusätzliche Fluidkanäle usw. erforderlich sind. Damit kann der erforderliche Gasventileinsatz zur Verbesserung bestehender Steuereinrichtungen und Steueranlagen dienen.

Weitere vorteilhafte Einzelheiten von Ausführungsformen der Erfindung ergeben sich aus der Zeichnung, der Beschreibung oder Unteransprüchen. In der Zeichnung ist ein Ausführungsbeispiel der Erfindung veranschaulicht. Es zeigen:
- Figur 1: ein Gasventil in Schließstellung in längsgeschnittener Darstellung,
- Figur 2: das Ventil nach Figur 1 in ausschnittsweiser Schnittdarstellung in einem anderen Maßstab,
- Figur 3: das Ventil nach Figur 1 in Zündstellung im Längsschnitt,
- Figur 4: das Ventil nach Figur 3 in ausschnittsweiser Schnittdarstellung,
- Figur 5: das Ventil nach Figur 1 und 3 in Offenstellung im Längsschnitt,
- Figur 6: das Ventil nach Figur 5 im ausschnittsweisen Längsschnitt,
- Figur 7: das Ventil nach den Figuren 1, 3 und 5 in schematischer Darstellung in Schließstellung,
- Fig. 8-10: eine schematische Veranschaulichung des Ventils in Schließstellung, in Zündstellung und in Offenstellung und
- Figur 11: einen Zeitverlauf des Öffnens des Ventils.

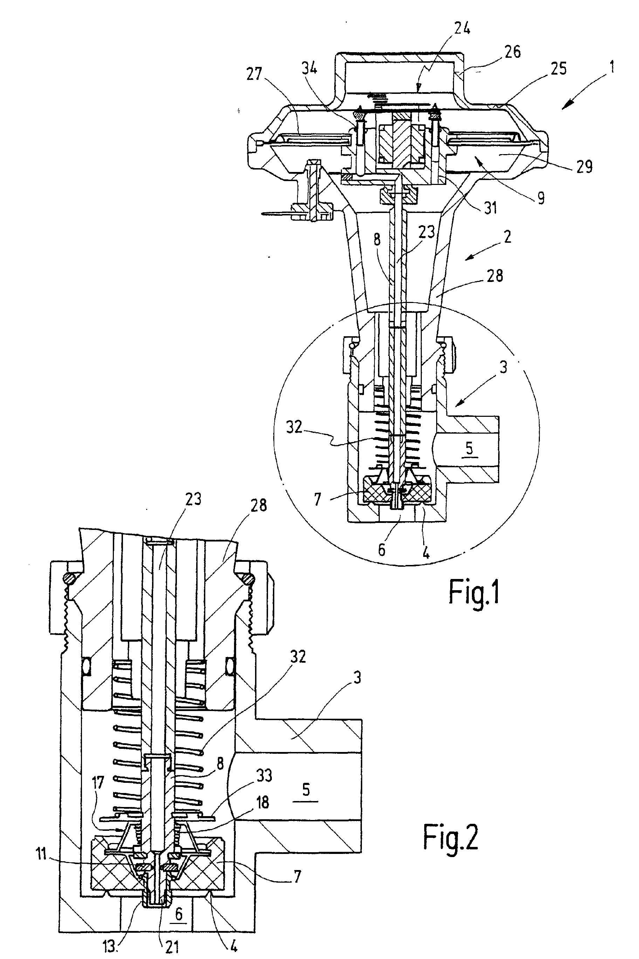

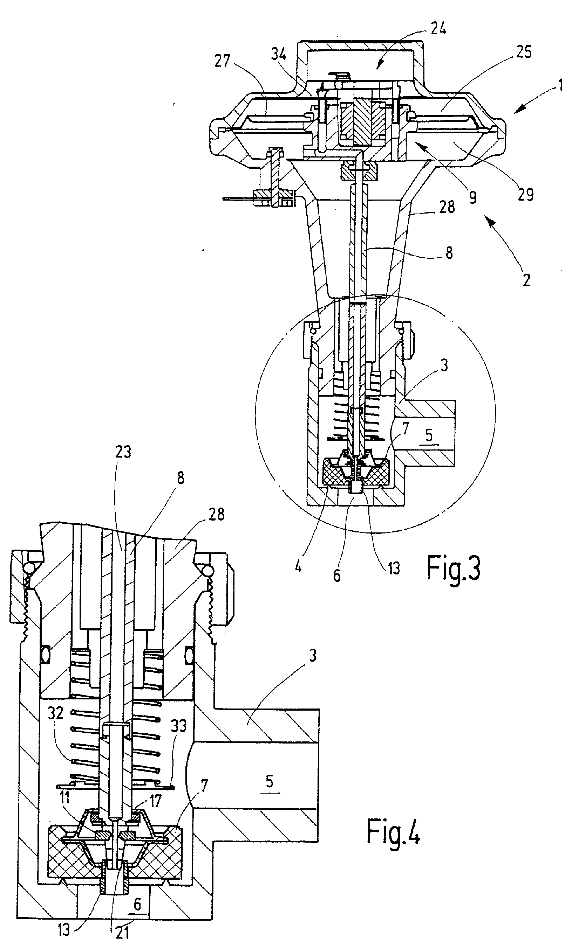

In Figur 1 ist ein Gasventil 1 veranschaulicht, zu dem ein Ventileinsatz 2 und ein Ventilgehäuse 3 gehören. Das Gasventil 1 dient der gesteuerten Freigabe bzw. der Sperrung eines Gaskanals, wobei beim Freigeben eine präzise, langsam ansteigende Zündgasmenge freigegeben werden soll. Dies wird von dem Ventileinsatz 2 nach Empfang eines Öffnungssignals selbsttätig bewirkt. Das Ventilgehäuse 3 weist dazu keinerlei Besonderheit auf. Es ist mit lediglich einem einzigen Ventilsitz 4 versehen, der den Gaskanal in einen Eingangsabschnitt 5 und einen Ausgangsabschnitt 6 unterteilt. Der Ventilsitz 4 wird beispielsweise durch eine ringförmige Rippe gebildet, auf der ein zu dem Ventileinsatz 2 gehöriges Ventilverschlussglied 7 aufsitzt.

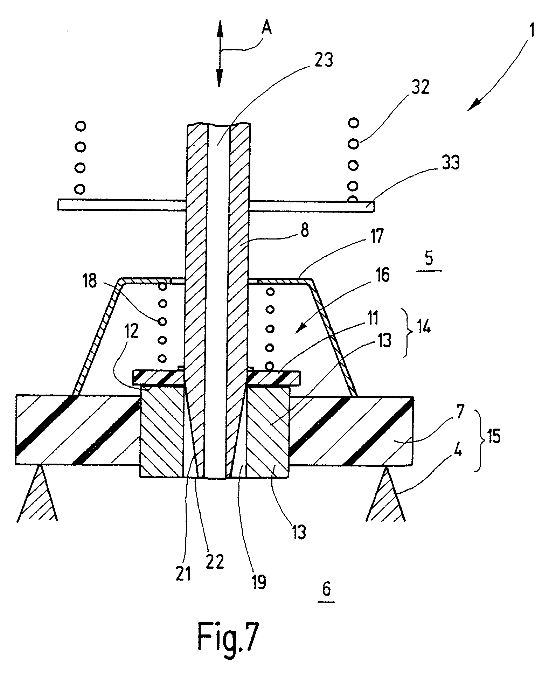

Aus Figur 2 geht in Verbindung mit der Prinzipdarstellung gemäß Figur 7 der Aufbau des Ventileinsatzes 2 im Bereich des Ventilverschlussglieds 7 hervor. Letzteres ist im Wesentlichen zylinder- oder scheibenförmig ausgebildet und weist an seiner dem Ventilsitz 4 zu weisenden Flachseite eine elastisch abdichtende Oberfläche auf. Beispielsweise ist es aus einem Polymer ausgebildet oder mit einem Polymer versehen.

Das Ventilverschlussglied 7 sitzt mit axialem Spiel auf einer Ventilspindel 8, die mit ihrem von dem Ventilverschlussglied 7 abliegenden Ende mit einer Antriebseinrichtung 9 verbunden ist, die zur Bewegung der Ventilspindel 8 in Axialrichtung A dient. Das Axialspiel des Ventilverschlussglieds 7 gegen die Ventilspindel 8 ist begrenzt. In Richtung auf den Ventilsitz 4 hin drückt die Ventilspindel 8 über eine Druckscheibe 11 auf das Ventilverschlussglied 7. Die Druckscheibe 11 kann als zweites Ventilverschlussglied ausgebildet sein und beispielsweise mit einer stirnseitigen Ringfläche 12 einer Ventilbuchse 13 zusammenwirken, die koaxial zu der Ventilspindel 8 und dem Ventilverschlussglied 7 in Letzteres eingesetzt ist. Die Ventilbuchse 13 und die Druckscheibe 11 bilden gemeinsam ein Zünd- oder Hilfsventil 14 das geschlossen ist, wenn die Ventilspindel 8 mittels der Druckscheibe 11 das Ventilverschlussglied 7 an den Ventilsitz 4 andrückt. Der Ventilsitz 4 und das Ventilverschlussglied 7 stützt sich über ein Federmittel 16 an der Ventilspindel 8 ab. Dazu ist das Ventilverschlussglied 7 beispielsweise mit einem napfförmigen Halter 17 versehen, dessen Rand mit dem Ventilverschlussglied 7 verbunden und der eine Bodenöffnung aufweist. Durch diese erstreckt sich die Ventilspindel 8. Koaxial zu dieser ist eine Druckfeder 18 angeordnet, die sich mit ihrem oberen Ende an dem Boden des Halters 17 und somit an dem Ventilverschlussglied 7 abstützt. Mit ihrem unteren Ende stützt sie sich beispielsweise über die Druckscheibe 11 an der Ventilspindel 8 ab. Die Druckfeder 18 spannt somit das Hilfsventil 14 in Schließrichtung vor. Hinsichtlich des Hauptventils 15 wirkt sie in Öffnungsrichtung und spannt das Ventilverschlussglied 7 letztendlich gegen die Druckscheibe 11. Die Druckfeder 18 spannt das Ventilverschlussglied 7 somit in einer von dem Ventilsitz 4 weg weisenden Öffnung. Es wird aber erst wirksam, wenn sich die Ventilspindel 8 bewegt und eine weitere Kraft hinzukommt, die das Ventilverschlussglied 7 an dem Ventilsitz 4 hält (z.B. der Gasdruck). Außerdem bildet die Druckfeder 18 ein Anschlagmittel zur Begrenzung des Spiels des Ventilverschlussglieds 7 auf der Ventilspindel 8. Das Spiel findet seine Obergrenze, wenn die Druckfeder 18 vollständig zusammengedrückt ist.

An Stelle der Druckfeder 18 können auch anderweitige Anschlagmittel zur Begrenzung des Axialspiels vorgesehen sein.

Zur gesteuerten allmählichen Freigabe einer Gasmenge durch das Hilfsventil 14 bei Axialbewegung der Ventilspindel 8 ist diese an ihrem sich in eine Öffnung 19 der Ventilbuchse erstreckenden Ende mit einem Ventilkegel 21 versehen, dessen Länge etwa mit der Länge der Ventilbuchse 13 übereinstimmt. An seinem unteren (ausgangsseitigen) Ende kann der Ventilkegel 21 einen zylindrischen Abschnitt 22 aufweisen.

In der Ventilspindel 8 ist ein Fluidkanal 23 ausgebildet, der an ihrer Stirnseite und somit in dem Ausgangsabschnitt 6 des Gaskanals mündet. Der Fluidkanal 23 führt, wie Figur 1 veranschaulicht, über ein elektromagnetisch betätigtes Pilotventil 24 in eine Kammer 25, die in einem Antriebsgehäuse 26 durch eine Membran 27 abgegrenzt ist. Das Antriebsgehäuse 26 ist über einen Hals 28 mit dem Ventilgehäuse 3 verbunden. Die Ventilspindel 8 erstreckt sich koaxial durch den Hals 28. Die Membran 27 ist mit ihrem äußeren Rand mit dem Antriebsgehäuse 26 verbunden. In ihrem Zentralbereich ist sie mit der Ventilspindel 8 verbunden. Die der Kammer 24 gegenüberliegende Seite der Membran 27 ist über den Hals 28 mit dem Eingangsabschnitt 5 des Gaskanals verbunden. Mit ihrer zu dem Hals 28 gewandten Seite grenzt die Membran 28(?) in dem Antriebsgehäuse 26 eine weitere Kammer 29 ab. Das Pilotventil 24 weist einen Ausgleichskanal 31 auf, der die beiden Kammern 25, 29 gesteuert miteinander verbindet. Der Ausgleichskanal 31 wird von dem Pilotventil 24 gegensinnig zu dem Fluidkanal 23 gesteuert.

Die Antriebseinrichtung 9 dient zum Öffnen des Gasventils 1. Zum Schließen desselben dient eine Druckfeder 32. Diese stützt sich mit einem Ende an dem Hals 28 des Ventileinsatzes 2 und mit ihrem andere Ende an der Ventilspindel 8 ab. Dazu ist diese beispielsweise mit einer axial fest gelagerten Druckscheibe 33 versehen, die wie die Druckfeder 32 koaxial zu der Ventilspindel 8 angeordnet ist.

Das insoweit beschriebene Gasventil arbeitet wie folgt:

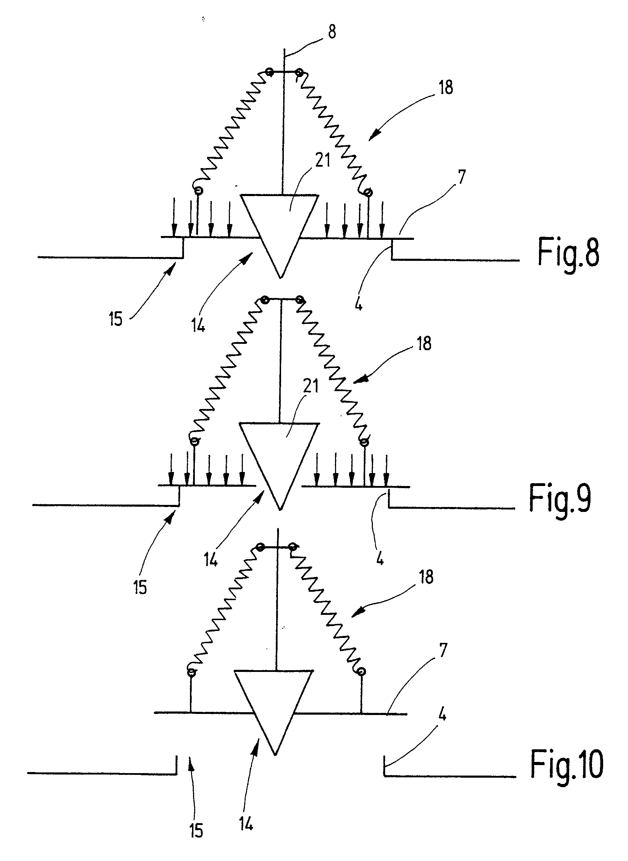

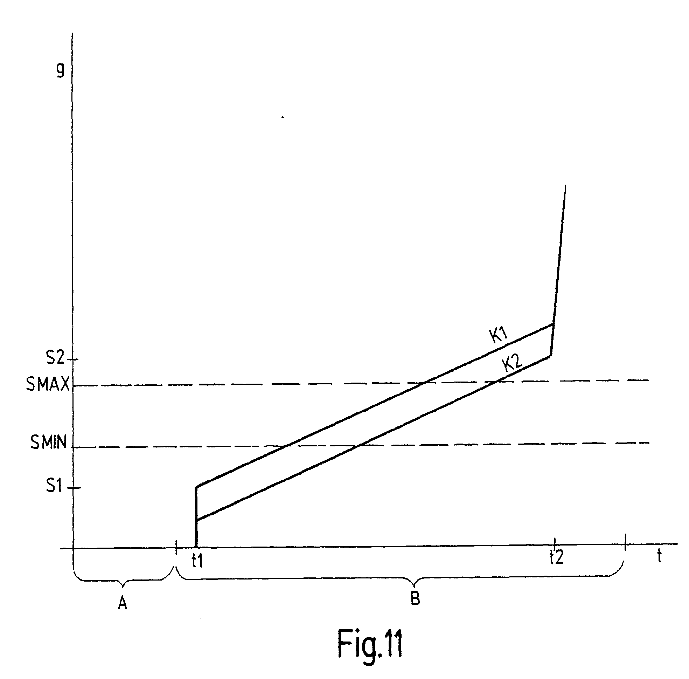

Im geschlossenen Zustand ist das Pilotventil 24 so angesteuert, dass der Fluidkanal 23 geschlossen und der Ausgleichskanal 31 freigegeben ist. Der Druck in der Kammer 25 stimmt somit mit dem Druck in der Kammer 29 überein. Die Membran 27 ist kräftefrei und die Druckfeder 32 drückt die Ventilspindel 8 in ihre Schließposition. Dabei lastet die Kraft der Druckfeder 32 über die Druckscheibe 33, die Ventilspindel 8, die Druckscheibe 11 und das Ventilverschlussglied 7 auf dem Ventilsitz 4. Zusätzlich lastet, wie in Figur 8 schematisch veranschaulicht ist, der in dem Eingangsabschnitt 5 herrschende Gasdruck auf dem Ventilverschlussglied 8. Das Gasventil 1 ist somit sicher geschlossen, wie Figur 11 in dem Zeitabschnitt A veranschaulicht.

Soll das Gasventil 1 nun geöffnet werden, wird das Pilotventil 24 umgeschaltet. Damit wird der Ausgleichskanal 31 geschlossen und der Fluidkanal 23 wird geöffnet. Während in der Kammer 29 somit nach wie vor der in dem Eingangsabschnitt herrschende Gasdruck ansteht, fällt der Gasdruck in der Kammer 25 nunmehr auf den in dem Ausgangsabschnitt 6 herrschenden Druck ab. Die Geschwindigkeit des Druckabfalls kann durch eine in dem Fluidkanal 23 angeordnete Düse 34 zweckentsprechend eingestellt werden. Vorzugsweise wird der Druckabfall nicht zu sehr behindert, um ein relativ zügiges Öffnen des Gasventils 1 zu ermöglichen.

Mit abfallendem Druck beginnt sich die Membran 27 in Öffnungsrichtung des Gasventils 1 zu bewegen. Die Ventilspindel 8 wird dabei gegen die Kraft der Druckfeder 32 in Öffnungsrichtung bewegt. Dabei bleibt das Ventilverschlussglied 7 unter der Druckwirkung des in dem Eingangsabschnitt 5 anstehenden Gases jedoch zunächst an dem Ventilsitz 4 aufliegend gehalten. Dies ist in Figur 9 veranschaulicht. Die Druckkraft des Gases ist dabei größer als die durch zunehmende Kompression der Druckfeder 18 erzeugte Kraft (die Druckfeder 18 in den Figuren 8 bis 10 zur Vereinfachung der Darstellung als Zugfeder veranschaulicht, die so angeordnet ist, dass sie die gleiche Wirkungsrichtung wie die Druckfeder 18 hat; dies ist eine alternative Ausführungsform) ist zunächst kleiner als die von dem Gas aufgebrachte Druckkraft. Damit hebt die Druckscheibe 11 von der Ringfläche 12 ab und das Hilfsventil 14 beginnt zu öffnen. Der Ventilkegel 21 und die Öffnung 19 beschränken dabei den Gasfluss auf einen niedrigen Wert. Dies ist in Figur 11 der Zeitpunkt t1. Der sich einstellende Wert S1 des Gasstroms liegt unterhalb eines Mindestflusswerts SMIN, bei dem an dem nachgeschalteten Brenner eine Zündung erfolgen kann.

Während der Fluidkanal 23 nun offen bleibt, bewegt sich die Ventilspindel 8 fortgesetzt weiter in Öffnungsrichtung und gibt somit in dem Ventilöffnungsintervall B (Figur 11) das Hilfsventil 15 mehr und mehr frei. Der Gasstrom g steigt dabei mehr und mehr an bis er den zum Zünden erforderlichen Mindestwert SMIN überschritten hat. Die Steigung setzt sich fort, bis ein bei aller Toleranz maximaler zum Zünden erforderlicher Wert SMAX überschritten ist. Sobald die mit zunehmender Kompression zunehmende Kraft der Druckfeder 18, die durch den Gasdruck auf dem Ventilverschlussglied 7 lastende Kraft erreicht oder überwindet oder sobald das Axialspiel des Ventilverschlussglieds 7 auf der Ventilspindel 8 seinen Anschlag erreicht hat, hebt das Ventilverschlussglied 7 von dem Ventilsitz 4 ab. Das erfolgt bei einer Durchströmung S2, die bei jeder zu erwartenden Toleranz, die in Figur 11 durch zwei Kennlinienäste K1, K2 veranschaulicht ist, oberhalb des zum Zünden maximal erforderlichen Gasstromwerts SMAX liegt.

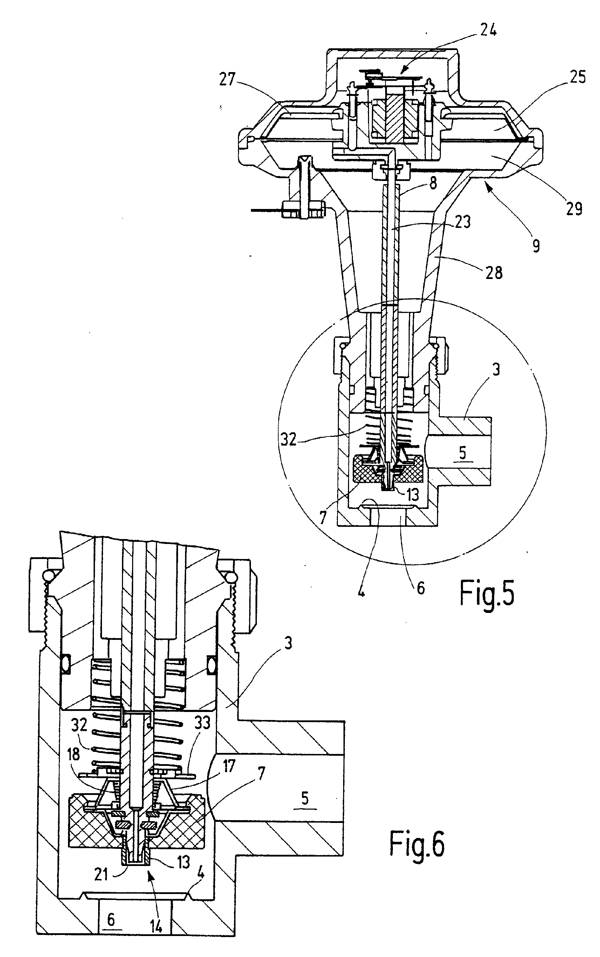

Ist die Bewegung der Ventilspindel 8 soweit fortgeschritten, dass das Hauptventil 15 öffnet, nimmt das Gasventil 1 die in den Figuren 5 und 6 veranschaulichte Position ein, die in Figur 10 nochmals schematisch veranschaulicht ist. Sobald das Ventilverschlussglied 7 von dem Ventilsitz 4 abhebt, springt es unter der Wirkung der Druckfeder 18 um den Wert in Öffnungsrichtung, dem ihm zuvor die Ventilspindel 8 vorausgeeilt war. Damit schließt das Hilfsventil 14 und das Hauptventil 15 öffnet sprunghaft. Dies ist in Figur 11 bei dem Zeitpunkt t2 veranschaulicht. Es erfolgt somit eine sehr schnelle Ventilöffnung, wobei sich der zwischen dem Eingangsabschnitt 5 und dem Ausgangsabschnitt 6 ergebende Druckabfall besonders gering ist. Dies insbesondere, weil durch das Zurückspringen des Ventilverschlussglieds die Mündung des Fluidkanals 23 sehr weit in den Gasstrom ragt, ohne dass das Ventilverschlussglied 7 den Gasstrom zu sehr behindert. Die Mündung des Fluidkanals, d.h. die Stirnseite des Ventilkegels 21 steht etwa auf gleicher Höhe mit der Unterseite der Ventilbuchse 13, weil das Hilfsventil 14 geschlossen ist.

Das erfindungsgemäße Gasventil 1 und der erfindungsgemäße Gasventileinsatz 2 gestatten darüber hinaus eine besonders präzise Bemessung der Zündgasmenge durch die spezielle Gestaltung des Hilfsventils 14. Die Druckscheibe 11 und die Ringfläche 12 bilden ein Sitzventil, das definiert öffnet und schließt. Zur Steuerung der durchfließenden Gasmenge wirkt der Ventilkegel 21 mit der zylindrischen inneren Wandung der Ventilbuchse 13 zusammen. Das Hilfsventil 14 ist dem Hauptventil 15 vollständig parallel geschaltet. Das von dem Hilfsventil 14 durchgelassene Gas muss nicht zuvor durch das Hauptventil 15 strömen.

Ein Gasventil und ein Gasventileinsatz sind dazu vorgesehen, an Brennern, insbesondere Brennern mit elektrischer Zündung beim Öffnen zunächst einen gedrosselten Gasstrom als Zündgasmenge und danach in dem gleichen Gaskanal möglichst schnell die volle Gasmenge durchzulassen. Dazu weist der Gasventileinsatz eine Ventilspindel 8 mit einem auf dieser mit Spiel gelagerten Ventilverschlussglied 7 auf. In diesem Ventilverschlussglied, das zu einem Hauptventil 15 gehört, ist ein Hilfsventil 14 ausgebildet, das durch die Bewegungen der Ventilspindel 8 gesteuert wird. Das Hilfsventil ist durch ein Federmittel in Schließrichtung vorgespannt, wobei das gleiche Federmittel das Ventilverschlussglied 7 in Öffnungsrichtung vorspannt. Durch diese Gestaltung wird ein präzises, langsames Öffnen für eine Zündgasmenge und danach ein schlagartiges Öffnen des gesamten Gasventils 1 erreicht.

## Patentansprüche

1. Gas-Ventileinsatz (2) zum Sperren und Freigeben eines Gas-Kanals in einem Gas-Ventilgehäuse (3), insbesondere für Gas-Geräte,
mit einer Ventilspindel (8), die mittels einer Antriebseinrichtung (9) in einer Axialrichtung (A) auf einen Ventilsitz (4) zu und von diesem weg bewegbar ist,
mit einem Ventilverschlussglied (7), das an der Ventilspindel (8) mit begrenztem axialen Spiel gelagert ist, und
mit einem ersten Federmittel (18), das, zwischen der Ventilspindel (8) und dem Ventilverschlussglied (7) wirkend, das Ventilverschlussglied (7) von seinem Ventilsitz (4) weg vorspannt.

2. Gas-Ventil mit einem Gas-Ventileinsatz nach Anspruch 1 und mit einem Gas-Ventilgehäuse (3), das einen Gas-Kanal mit einem Eingang und mit einem Ausgang aufweist, zwischen denen der Ventilsitz (4) ausgebildet ist, der den Gas-Kanal in einen Eingangsabschnitt (5) und einen Ausgangsabschnitt (6) unterteilt.

3. Gas-Ventil nach Anspruch 2, **dadurch gekennzeichnet, dass** sich die Ventilspindel (8) durch den Eingangsabschnitt (5) erstreckt und dass das Ventilverschlussglied (7) bei geschlossenem Gas-Ventil (1) auf dem Ventilsitz (4) abdichtend aufsitzt und den Eingangsabschnitt (5) des Gas-Kanals abschließt.

4. Gas-Ventileinsatz nach Anspruch 1, Gas-Ventil nach Anspruch 2, **dadurch gekennzeichnet, dass** die Ventilspindel (8) mittels eines zweiten Federmittels (32) in Axialrichtung (A) auf den Ventilsitz (4) hin vorgespannt ist.

5. Gas-Ventileinsatz nach Anspruch 1, Gas-Ventil nach Anspruch 2, **dadurch gekennzeichnet, dass** in dem Ventilverschlussglied (7) ein Hilfskanal (19) vorgesehen ist, dem ein Hilfsventil (14) zugeordnet ist.

6. Gas-Ventileinsatz oder Gas-Ventil nach Anspruch 5, **dadurch gekennzeichnet, dass** zu dem Hilfsventil (14) eine in dem Ventilverschlussglied (7) fest angeordnete Ventilbuchse (13) mit einer Durchgangsöffnung gehört, die den Hilfskanal (19) bildet.

7. Gas-Ventileinsatz oder Gas-Ventil nach Anspruch 6, **dadurch gekennzeichnet, dass** die Durchgangsöffnung (19) zylindrisch ausgebildet ist.

8. Gas-Ventileinsatz oder Gas-Ventil nach Anspruch 6, **dadurch gekennzeichnet, dass** zu dem Hilfskanal (19) ein Steuerkegel (21) gehört, der mit der Durchgangsöffnung (19) einen von der axialen Relativposition abhängigen Ringspalt festlegt.

9. Gas-Ventileinsatz nach Anspruch 1, Gas-Ventil nach Anspruch 2, **dadurch gekennzeichnet, dass** zu der Antriebseinrichtung (9) ein Gehäuse gehört, in dem eine Membrane (27) angeordnet ist, um wenigstens eine Arbeitskammer (24) abzutrennen.

10. Gas-Ventileinsatz nach Anspruch 1, Gas-Ventil nach Anspruch 2, **dadurch gekennzeichnet, dass** in der Ventilspindel (8) ein Fluidkanal (23) vorgesehen ist, der an dem Ende der Ventilspindel (8) mündet, das das Ventilverschlussglied (7) trägt.

11. Gas-Ventileinsatz nach Anspruch 1, Gas-Ventil nach Anspruch 2, **dadurch gekennzeichnet, dass** dem Fluidkanal (23) ein Pilotsteuerventil (24) zugeordnet ist.

12. Verfahren zum Zünden eines Gasgeräts, das einen Brenner aufweist, wobei an dem Brenner eine Zündquelle aktiviert wird und wobei der dem Brenner zugeleitete Gasstrom ausgehend von einem Wert, der sicher unter einem zum Zünden erforderlichen Mindestgasstrom liegt, allmählich erhöht wird bis der Gasstrom einen Teillast-Wert angenommen hat, bei dem mit Sicherheit ein Zünden erfolgt ist, wonach der Gasstrom schnell ganz freigegeben wird.
